# EUROPEAN PATENT SPECIFICATION

(11) **EP 0 310 350 B1**
(45) Date of publication and mention of the grant of the patent: **25.01.1995**
(21) Application number: 88308975.7
(22) Date of filing: 28.09.1988
(51) Int. Cl.: D21H 19/38, D21H 19/66, B32B 29/00, B44F 7/00

(54) **Decorative laminates having 3-dimensional effect and sheets for use therein**
Dekorative Schichtstoffe mit einem dreidimensionalen Effekt und dafür geeignete Bahnen
Laminés décoratifs ayant un effet tridimensionnel et feuilles pour cette application

(30) Priority: 28.09.1987 US 101707
(43) Date of publication of application: 05.04.1989
(73) Proprietor: THE MEAD CORPORATION, Dayton Ohio 45401-1817 (US)
(72) Inventor: Mehta, Mahendra Mead Central Research, Chillicothe Ohio, 45601 (US)
(74) Representative: Deans, Michael John Percy

(56) References cited:
- US-A- 3 940 538
- US-A- 4 044 185
- DATABASE WPIL, no 90-097115 Derwent Publications Ltd, London, GB, & SU-A-1481306(Leningrad Cell-Paper Ins et al.)
- DATABASE WPIL, no.81-26714D Derwent Publications Ltd, London, GB & SU-A-751874 (Cellulose Paper Ind Res)
- DATABASE WPI, no.79-41238B Derwent Publications Ltd, London, GB & JP-A-54048878 (Kojin KK)
- ABSTRACT BULLETIN OF THE INSTITUTE OF PAPER CHEMISTRY. vol. 57, no. 11, May 1987, APPLETON US page 1630 T.MATANO ET AL.: "Laminated decorative boards with uzukuri wood-grain patterns."

## Description

High pressure decorative laminates are laminated articles comprising plural layers of synthetic resin impregnated paper sheets consolidated or bonded together into a unitary structure under high heat and pressure. Conventionally, the decorative or print layer is a sheet of high quality cellulose fibre impregnated with a thermosetting condensation resin such as melamine formaldehyde resins. The decorative sheet may be overlayed with a low basis weight transparent sheet, which is also a sheet of cellulose impregnated with melamine formaldehyde resin. These sheets are bonded to a plurality of core or body sheets of a fibrous cellulosic material, usually unbleached Kraft paper, impregnated with a thermosetting phenol-formaldehyde resin. Typically, seven or eight core sheets are consolidated with only a single decorative sheet and a single overlay sheet to form a decorative laminate.

The present invention arises from our work in seeking to provide practical embodiments of decorative laminate having a 3-dimensional or depth-like effect such as the effect of true marble or tree wood grain.

In accordance with a first aspect of the present invention, we provide a decorative laminate comprising a plurality of consolidated resin impregnated fibrous sheets, characterised in that at least one of said sheets is a 3-dimensional decor sheet formed from bleached cellulose fibres and an opacifying agent comprising one or more of titanium dioxide, pearl pigment, clay, amorphous silica, and like opacifying pigments, the combined amount (dry weight) of opacifying agent being such that said sheet exhibits diffused transmission characteristics and bears the following relationship to the basis weight of the sheet:

| Basis Weight x 10⁻²kgm⁻² (lbs 3·10³ft²) | Opacifying agent (%) |
|---|---|
| 3.25 - 8.12 (20 - 50) | 0.5 - 10 |
| 8.12 - 16.24 (50 - 100) | 0.5 - 5 |
| 16.24 - 32.48 (100 - 200) | 0.5 - 2 |

, the % opacifying agent being based on the total weight of bleached cellulose fibres plus opacifying agent.

The invention provides, in a second and alternative aspect thereof, a sheet for use in a decorative laminate, characterised in that said sheet is formed from bleached cellulose fibres and an opacifying agent comprising one or more of titanium dioxide, pearl pigment, clay, amorphous silica and like opacifying pigments, said sheet having controlled opacity and diffused transmission such that said sheet is useful in providing a 3-dimensional effect to a laminate by reflecting light from various layers of said laminate wherein the combined amount of opacifying agent bears the following relationship to the basis weight of said sheet:

| Basis Weight x 10⁻²kgm⁻² (lbs 3·10³ft²) | Opacifying agent (%) |
|---|---|
| 3.25 x 8.12 (20 - 50) | 0.5 - 10 |
| 8.12 - 16.24 (50 - 100) | 0.5 - 5 |
| 16.24 - 32.48 (100 - 200) | 0.5 - 2 |

, the % opacifying agent being based on the total weight of bleached cellulose fibres plus opacifying agent.

The opacifying agent, preferably titanium dioxide and/or pearl pigment, is added to the paper furnish for the decor sheet to provide a controlled level of opacity and a translucent effect which imparts a 3-dimensional effect to any pattern pressed within the laminate structure. By "controlled level of opacity" is meant that the resin saturated paper sheet exhibits diffused transmission. Diffused transmission occurs when light penetrates an object, scatters and emerges diffusely on the other side. The transmitted light leaves the object in all directions. In a totally transparent material, the light passes without diffusion. Preferably the sheet transmits at least 50% of the incident light but is not totally transparent.

The diffused transmission of light in a 3-dimensional decor sheet may be provided by using a furnish containing about 90 to 99.5% cellulose fibres, and about 0.5 to 10% titanium dioxide or pearl pigment. The amount of pigment which may be used will depend on the basis weight of the paper and the degree of translucency desired as shown in the following table:

| Basis Weight x 10⁻²kgm⁻² (lbs 3·10³ft) | TiO₂ and/or Pearl Pigment (%) |
|---|---|
| 3.25 - 8.12 (20 - 50) | 0.5 - 10 |
| 8.12 - 16.24 (50 - 100) | 0.5 - 5 |
| 16.24 - 32.45 (100 - 200) | 0.5 - 2 |

Pearl pigments are thin flakes of mica coated with titanium dioxide. While the detailed description which follows makes reference to titanium dioxide, those skilled in this art will appreciate that equivalent opacifying pigments may be used in place of or in combination with titanium dioxide such as clay, amorphous silica, etc. The amount of titanium dioxide and pearl pigment should preferably be adjusted within the aforesaid ranges to provide the 3-dimensional translucent effect. The combined amount of titanium dioxide and pearl pigment should in general not exceed about 10%.

The cellulose fibres used are preferably a bleached Kraft pulp. The pulp may consist of hardwoods or softwoods or a mixture of hardwoods and softwoods. Higher alpha cellulose such as cotton may be added to enhance characteristics such as post-formability.

Additives such as alum, alkali and the like may be used to control end use characteristics such as post-forming. Wet strength resins may be added for wet strength characteristics. A retention aid may also be used if desired.

The basis weight of the sheets may range from approximately 20 to 200 pounds per 3000 square feet and preferably ranges from approximately 60 to 120 pounds per 3000 square feet. (1lb. per 3000 sq. ft. approximately equals 1.6 x 10-³ kg/m².

The 3-dimensional decor sheets are prepared, dried and impregnated in an otherwise conventional manner. The sheets are preferably impregnated with commercially available melamine formaldehyde or polyester laminating resins and dried to a non-tacky but fusible B-stage.

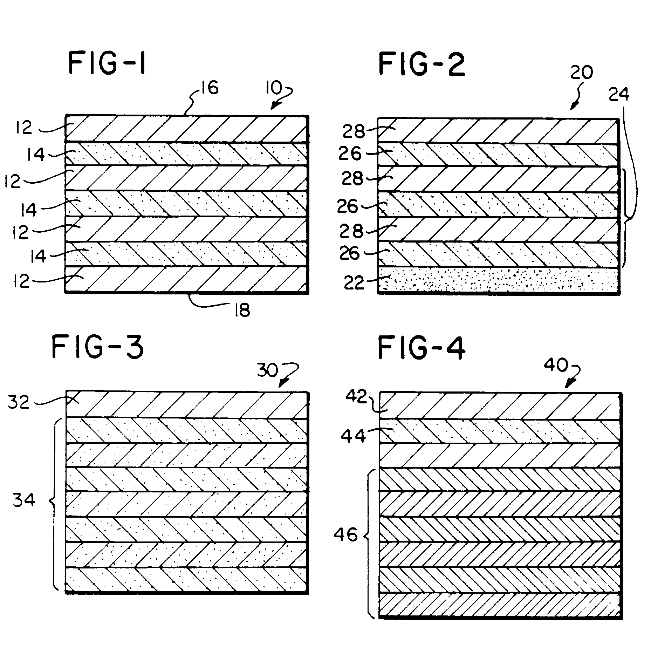

The invention is hereinafter more particularly described by way of example only with reference to the accompanying drawing, in which Figs. 1-4 illustrate various laminate constructions which may be used in practice of the present invention.

In preferred embodiments, the decor sheet described above is used in combination with other sheets prepared from the same furnish which are randomly pigmented or coated with coloured pigments or printed as desired (hereafter these sheets will be genericly referred to as "printed 3-dimensional decor sheets.") The laminate may also contain conventional unbleached Kraft core stock.

Various patterns may be printed or created in these 3-dimensional decor sheets. Most typically, a marble grain or wood grain pattern or portions of a marble pattern or wood grain pattern such as selected coloured streaks will be printed on these sheets. A typical laminate includes a number of the above described unprinted sheets and a number of printed 3-dimensional decor sheets. Such laminates demonstrate the phenomenon of diffused reflection. When such a laminate is viewed by an observer, the incident light is reflected from printed areas of various layers of the laminate thus providing a 3-dimensional effect.

The number of sheets making up a laminate will depend upon the thickness of the laminate which is desired, the basis weight of the papers used and the depth of the 3-dimensional effect desired. The laminate may range from 1/16 to 1/2 inch (0.15875 to 1.27 cm) thick and preferably 1/12 to 1/5 inch (0.21167 to 0.508 cm) thick. In most instances, the laminate will contain approximately 5 to 8 sheets. In other cases, however, where a thick laminate is desired, the laminate may contain up to 40 3-dimensional decor sheets. On the other hand if a heavier basis weight paper is used, the laminate may be formed from as few as two or three 3-dimensional decor sheets.

In preferred embodiments, the top sheet of the laminate is an unprinted 3-dimensional decor sheet containing titanium dioxide and pearl pigment. The bottom sheet of the laminate can be an unprinted sheet or a printed sheet or a white sheet containing a high loading of titanium dioxide (a barrier sheet) or a solid coloured decorative sheet containing a high concentration of a coloured pigment (solid colour decor or print base sheet).

Fig. 1 illustrates one embodiment wherein the laminate 10 comprises a plurality of above described unprinted 3-dimensional decor sheets containing titanium dioxide and/or pearl pigment 12 and randomly pigmented or printed 3-dimensional decor sheets 14. In accordance with the embodiment illustrated in Fig. 1, the top and bottom sheets 16 and 18 are unprinted sheets containing titanium dioxide and pearl pigment. The balance of the laminate is formed from alternating pigmented or printed and unprinted sheets.

Fig. 2 illustrates an embodiment in which the laminate 20 includes an unprinted top sheet 28 and an opaque white barrier sheet 22 containing a high loading of titanium dioxide as the bottom sheet. The core sheets 24 are alternating 3-dimensional decor sheets of printed 3-dimensional decor sheets 26 and unprinted 3-dimensional decor sheets 28 containing titanium dioxide and/or pearl pigment. This laminate exhibits an enhanced 3-dimensional effect.

The laminate illustrated in Fig. 2 can be modified to include a solid coloured sheet as the bottom sheet 22 instead of the high opacity white sheet. In this case, a 3-dimensional effect against a coloured background is obtained.

Fig. 3 illustrates another embodiment in which the laminate 30 includes an unprinted 3-dimensional top sheet containing titanium dioxide and/or pearl pigment 32 and the balance of the laminate is printed 3-dimensional decor sheets 34.

The 3-dimensional effect can be achieved in as few as two or three 3-dimensional decor sheets Consequently, another embodiment comprises a laminate comprising 2 or more printed and/or unprinted 3-dimensional decor sheets in a laminate with a plurality of conventional unbleached Kraft core sheets. The printed or unprinted sheets are adjacently positioned at the surface of the laminate. The top sheet of the laminate should be an unprinted 3-dimensional decor sheet. The unbleached Kraft sheets are positioned below and contribute additional overall strength to the laminate. Fig. 4 illustrates one example in which the laminate 40 includes an unprinted top and third sheet containing TiO₂ and pearl pigment 42 and printed second sheet 44 and a number of unbleached Kraft core sheets 46.

In accordance with another embodiment the laminates illustrated in Fig. 1-3 may additionally include an overlay on the top surface of the laminate. This overlay may be tinted to modify the aesthetic effect of the laminate, or an abrasion-resistant overlay may be used.

The Examples in attached figures are only for illustration. Any number of combinations of unprinted and printed 3-dimensional decor sheets are possible based upon the desired effect. The location of printed sheet can vary based upon print intensity and sheet composition, e.g., for a given effect, the lightly printed sheet may be the second sheet from the top and heavily printed sheet may be third or fourth sheet from the top. The remaining top sheets in such case will be unprinted sheets. A single sheet containing high level of TiO₂ and/or pearl pigment within the ranges defined earlier can be replaced by two or three sheets containing reduced levels of TiO₂ and pearl pigment to get the same effect.

Laminates in accordance with the present teaching may be provided with glossy, matt or satin finishes in a known manner. Furthermore, properties such as flame retardant characteristics, abrasion resistance can be introduced during the papermaking process using technology which is already available.

The present invention is illustrated in more detail by the following non-limiting example.

### Example 1

A furnish containing 70% bleached hardwood, 28% bleached softwood, 1% titanium dioxide, 1% pearl pigment, and a wet strength resin was prepared and formed into a 14.62x10⁻²kgm⁻² (90lb 3·10³ft²) basis weight sheet on a fourdrinier pilot paper machine hereinafter referred to as the "3-dimensional unprinted sheet". Several of the unprinted sheets were printed with a marble pattern to form "3-dimensional printed sheets".

The printed and unprinted sheets were saturated with a melamine-formaldehyde thermosetting resin and the saturated sheets were cured to a B-stage by heating at 121.1°C (250°F) for 4 minutes. The B-stage printed and unprinted sheets were alternately positioned in a book. The top sheet is an unprinted sheet. The book was pressed in a laboratory laminating press at 175.6°C (350°F) and 4.88x10³kgm⁻³ (1000 psi) for 10 minutes and cooled under pressure for 5 minutes. The laminate thus obtained had a 3-dimensional marble effect.

Those skilled in the art will appreciate that any conventional laminating resin can be used in practice including phenolics, epoxides, and polyester impregnating resins.

### Example 2

A furnish containing 97% bleached hardwood, 2% titanium dioxide and 1% pearl pigment and a wet strength resin was used to prepared printed and unprinted sheets as in Example 1. These sheets were saturated with a laminating resin and laminated as described in Example 1. The laminate thus obtained had a 3-dimensional marble effect, however, the effect was less enhanced than in the laminate of Example 1.

## Claims

1. A decorative laminate comprising a plurality of consolidated resin impregnated fibrous sheets, characterised in that at least one of said sheets is a 3-dimensional decor sheet formed from bleached cellulose fibres and an opacifying agent comprising one or more of titanium dioxide, pearl pigment, clay, amorphous silica, and like opacifying pigments, the combined amount (dry weight) of opacifying agent being such that said sheet exhibits diffused transmission characteristics and bears the following relationship to the basis weight of the sheet:
| Basis Weight x 10⁻²kgm⁻² (lbs 3·10³ft²) | Opacifying agent (%) |
|---|---|
| 3.25 - 8.12 (20 - 50) | 0.5 - 10 |
| 8.12 - 16.24 (50 - 100) | 0.5 - 5 |
| 16.24 - 32.48 (100 - 200) | 0.5 - 2 |
, the % opacifying agent being based on the total weight of bleached cellulose fibres plus opacifying agent.

2. A decorative laminate according to Claim 1, further characterised in that said laminate includes at least one of said 3-dimensional decor sheets which is printed and at least one of said 3-dimensional decor sheets which is unprinted.

3. A decorative laminate according to Claim 2, further characterised in that at least one of said 3-dimensional unprinted decor sheets is positioned above the uppermost of said printed decor sheets in said laminate.

4. A decorative laminate according to Claim 3, further characterised in that said printed and unprinted decor sheets are positioned in said laminate to provide a 3-dimensional effect.

5. A decorative laminate according to any of Claims 2, 3 or 4, further characterised in that said 3-dimensional printed or unprinted decor sheets are alternately positioned within said laminate.

6. A decorative laminate according to any of Claims 2 to 5, further characterised in that, with the possible exception of the bottommost sheet, said laminate consists essentially of said printed and unprinted 3-dimensional decor sheets.

7. A decorative laminate according to any preceding claim, further characterised in that the bottommost sheet in said laminate is a high opacity white or coloured sheet.

8. A decorative laminate according to any of Claims 2 to 6, wherein the bottommost sheet in said laminate is an unprinted 3-dimensional decor sheet.

9. A decorative laminate according to any of Claims 2 to 6, further characterised in that at least one of said unprinted decor sheets is positioned below the bottommost of said printed decor sheets in said laminate.

10. A decorative laminate according to any of Claims 1 to 5, further characterised in that an overlay is positioned on the surface of the or the uppermost of said decor sheets.

11. A decorative laminate according to any of Claims 1 to 5, further characterised in that an overlay is present as the uppermost and the lowermost sheet in said laminate.

12. A decorative laminate according to Claims 10 or 11, further characterised in that said overlay is a high abrasion overlay to impart mar and scuff resistance.

13. A decorative laminate according to any of Claims 10, 11 or 12, further characterised in that said overlay is a tinted overlay.

14. A decorative laminate according to any preceding claim, further characterised in that said cellulose fibres include hardwood and softwood fibres.

15. A decorative laminate according to any of Claim 1 to 5, further characterised in that said laminate additionally comprises at least one unbleached Kraft core sheet.

16. A sheet for use in a decorative laminate, characterised in that said sheet is formed from bleached cellulose fibres and an opacifying agent comprising one or more of titanium dioxide, pearl pigment, clay, amorphous silica and like opacifying pigments, said sheet having controlled opacity and diffused transmission such that said sheet is useful in providing a 3-dimensional effect to a laminate by reflecting light from various layers of said laminate wherein the combined amount of opacifying agent bears the following relationship to the basis weight of said sheet:
| Basis Weight x 10⁻²kgm⁻² (lbs 3·10³ft²) | Opacifying agent (%) |
|---|---|
| 3.25 - 8.12 (20 - 50) | 0.5 - 10 |
| 8.12 - 16.24 (50 - 100) | 0.5 - 5 |
| 16.24 - 32.48 (100 - 200) | 0.5 - 2 |
, the % opacifying agent being based on the total weight of bleached cellulose fibres plus opacifying agent.

17. A sheet according to Claim 16, further characterised in that said cellulose fibres include hardwood and softwood fibres.

## Patentansprüche

1. Dekorativer Schichtpreßstoff (Laminat), bestehend aus einer Vielzahl von verbundenen harzimprägnierten Faserbahnen, dadurch gekennzeichnet, daß mindestens eine der genannten Bahnen eine dreidimensionale Dekorbahn ist, hergestellt aus gebleichten Zellstoffasern und einem die Opazität erhöhenden Trübungsmittel aus Titandioxid, Perl-Pigment, Kaolin, amorphem Silizium oder ähnlichen Trübungspigmenten oder einer Mischung daraus, wobei die Gesamtmenge (Trockengewicht) des Trübungsmittels so groß ist, daß die genannte Bahn die Eigenschaft diffuser Transparenz aufweist und die Gesamtmenge zur Flächenmasse der Bahn im folgenden Verhältnis steht:
| Flächenmasse in 10-²kg·m-² | Trübungsmittel (%) |
|---|---|
| 3,25 - 8,12 (20 - 50)* | 0,5 - 10 |
| 8,12 - 16,24 (50 - 100)* | 0,5 - 5 |
| 16,24 - 32,48 (100 - 200)* | 0,5 - 2 |
| | |
|---|---|
| * Dimension lbs/ 3·10³ft² | |
wobei sich der prozentuale Anteil des Trübungsmittels auf das Gesamtgewicht der gebleichten Zellstoffasern zuzüglich des Trübungsmittels bezieht.

2. Dekorativer Schichtpreßstoff gemäß Anspruch 1, dadurch gekennzeichnet, daß der genannte Schichtpreßstoff mindestens eine der genannten dreidimensionalen Dekorbahnen enthält, die bedruckt sind, und mindestens eine der genannten dreidimensionalen Dekorbahnen enthält, die unbedruckt sind.

3. Dekorativer Schichtpreßstoff gemäß Anspruch 2, dadurch gekennzeichnet, daß in dem genannten Schichtpreßstoff mindestens eine der genannten unbedruckten dreidimensionalen Dekorbahnen über der obersten der genannten bedruckten Dekorbahnen angeordnet ist.

4. Dekorativer Schichtpreßstoff gemäß Anspruch 3, dadurch gekennzeichnet, daß die genannten bedruckten und unbedruckten Dekorbahnen so in dem genannten Schichtpreßstoff angeordnet sind, daß ein dreidimensionaler Effekt entsteht.

5. Dekorativer Schichtpreßstoff gemäß einem der Ansprüche 2, 3 oder 4, dadurch gekennzeichnet, daß in dem genannten Schichtpreßstoff die genannten bedruckten und unbedruckten dreidimensionalen Dekorbahnen alternierend angeordnet sind.

6. Dekorativer Schichtpreßstoff gemäß einem der Ansprüche 2 bis 5, dadurch gekennzeichnet, daß, mit der möglichen Ausnahme der untersten Bahn, der genannte Schichtpreßstoff im wesentlichen aus den genannten bedruckten und unbedruckten dreidimensionalen Dekorbahnen besteht.

7. Dekorativer Schichtpreßstoff gemäß einem der vorhergehenden Ansprüche, dadurch gekennzeichnet, daß die unterste Bahn des genannten Schichtpreßstoffes eine hochdeckende weiße oder farbige Bahn ist.

8. Dekorativer Schichtpreßstoff gemäß einem der Ansprüche 2 bis 6, bei dem die unterste Bahn des genannten Schichtpreßstoffes eine unbedruckte dreidimensionale Dekorbahn ist.

9. Dekorativer Schichtpreßstoff gemäß einem der Ansprüche 2 bis 6, dadurch gekennzeichnet, daß in dem genannten Schichtpreßstoff mindestens eine der genannten unbedruckten Dekorbahnen unter der untersten der genannten bedruckten Dekorbahnen angeordnet ist.

10. Dekorativer Schichtpreßstoff gemäß einem der Ansprüche 1 bis 5, dadurch gekennzeichnet, daß auf der Oberfläche der einen oder der obersten der genannten Dekorbahnen eine Deckschicht angeordnet ist.

11. Dekorativer Schichtpreßstoff gemäß einem der Ansprüche 1 bis 5, dadurch gekennzeichnet, daß auf der obersten und der untersten Schicht des genannten Schichtpreßstoffes eine Deckschicht angeordnet ist.

12. Dekorativer Schichtpreßstoff gemäß Anspruch 10 oder 11, dadurch gekennzeichnet, daß die genannte Deckschicht eine hochgradig abriebfeste Deckschicht ist, die Kratz- und Scheuerfestigkeit verleiht.

13. Dekorativer Schichtpreßstoff gemäß einem der Ansprüche 10, 11 oder 12, dadurch gekennzeichnet, daß die genannte Deckschicht eine eingefärbte Deckschicht ist.

14. Dekorativer Schichtpreßstoff gemäß einem der vorhergehenden Ansprüche, dadurch gekennzeichnet, daß die genannten Cellulosefasern Hartholz- und/oder Weichholzfasern einschließen.

15. Dekorativer Schichtpreßstoff gemäß einem der Ansprüche 1 bis 5, dadurch gekennzeichnet, daß der genannte Schichtpreßstoff zusätzlich mindestens eine ungebleichte Kraftpapier-Kernbahn enthält.

16. Bahn zur Verwendung in einem dekorativen Schichtpreßstoff, dadurch gekennzeichnet, daß die genannte Bahn aus gebleichten Zellstoffasern und einem die Opazität erhöhenden Trübungsmittel hergestellt wird, welches aus Titandioxid, Perl-Pigment, Kaolin, amorphem Silizium oder ähnlichen Trübungspigmenten oder einer Mischung daraus besteht, wobei die genannte Bahn eine vorbestimmte Opazität und diffuse Transparenz besitzt, so daß die genannte Bahn dazu verwendbar ist, einem Schichtpreßstoff einen dreidimensionalen Effekt zu verleihen, der durch die Reflexion von Licht an verschiedenen Bahnen des genannten Schichtpreßstoffes erzeugt wird, wobei die Gesamtmenge des Trübungsmittels zur Flächenmasse der genannten Bahn im folgenden Verhältnis steht:
| Flächenmasse in 10-²kg·m-² | Trübungsmittel (%) |
|---|---|
| 3,25 - 8,12 (20 - 50)* | 0,5 - 10 |
| 8,12 - 16,24 (50 - 100)* | 0,5 - 5 |
| 16,24 - 32,48 (100 - 200)* | 0,5 - 2 |
| | |
|---|---|
| * Dimension lbs/ 3·10³ft² | |
wobei sich der prozentuale Anteil des Trübungsmittels auf das Gesamtgewicht der gebleichten Zellstoffasern zuzüglich des Trübungsmittels bezieht.

17. Bahn gemäß Anspruch 16, dadurch gekennzeichnet, daß die genannten Zellstoffasern Hartholz- und/oder Weichholzfasern umfassen.

## Revendications

1. Stratifié décoratif comprenant une pluralité de feuilles fibreuses consolidées imprégnées de résine, caractérisé en ce qu'au moins une desdites feuilles est une feuille avec une décoration tridimensionnelle formée à partir de fibres de cellulose blanchies et d'un agent opacifiant comprenant un ou plusieurs dioxydes de titane, pigments à base de perle, de l'argile, de la silice amorphe, et d'autres pigments opacifiants similaires, la quantité totale (en poids sec) d'agent opacifiant étant telle que ladite feuille présente des caractéristiques de transmission diffusée et présente la relation suivante avec le poids de base de la feuille:
| Poids de base x 10⁻² kgm⁻² (lbs/3x10³ ft²) | Agent opacifiant (%) |
|---|---|
| 3,25 - 8,12 (20 - 50) | 0,5 - 10 |
| 8,12 - 12,64 (50 - 100) | 0,5 - 5 |
| 16,24 - 32,48 (100 - 200) | 0,5 - 2 |
le pourcentage d'agent opacifiant étant basé sur le poids total de fibres de cellulose blanchies et d'agent opacifiant.

2. Stratifié décoratif selon la revendication 1, caractérisé en outre en ce que ledit stratifié comprend au moins une desdites feuilles de décoration tridimensionnelle imprimée et au moins une desdites feuilles de décoration tridimensionnelle non imprimée.

3. Stratifié décoratif selon la revendication 2, caractérisé en outre en ce qu'au moins une desdites feuilles de décoration tridimensionnelle non imprimée est placée dans le stratifié au-dessus de celle de la feuille de décoration imprimée ayant la position la plus élevée.

4. Stratifié décoratif selon la revendication 3, caractérisé en ce que lesdites feuilles de décoration imprimées et non imprimées sont positionnées dans le stratifié pour donner un effet tridimensionnel.

5. Stratifié décoratif selon l'une quelconque des revendications 2, 3 ou 4, caractérisé en outre en ce que lesdites feuilles de décoration imprimées ou non imprimées sont positionnées de manière alternée dans le stratifié.

6. Stratifié décoratif selon l'une quelconque des revendications 2 à 5, caractérisé en outre en ce qu'il consiste essentiellement en ces feuilles de décoration tridimensionnelles imprimées et non imprimées, à l'exception possible de la feuille située la plus en dessous.

7. Stratifié décoratif selon l'une quelconque des précédentes revendications, caractérisé en outre en ce que la feuille la plus en dessous de ce stratifié est une feuille blanche ou colorée possédant une opacité élevée.

8. Stratifié décoratif selon l'une quelconque des revendications 2 à 6, dans lequel la feuille la plus en dessous est une feuille de décoration tridimensionnelle non imprimée.

9. Stratifié décoratif selon l'une quelconque des revendications 2 à 6, caractérisé en outre en ce qu'au moins une des feuilles de décoration non imprimées est positionnée dans ce stratifié sous la feuille la plus en dessous des feuilles de décoration imprimées.

10. Stratifié décoratif selon l'une quelconque des revendications 1 à 5, caractérisé en ce qu'une feuille de couverture est positionnée sur la surface de la feuille de décoration la plus en dessus des feuilles de décoration.

11. Stratifié décoratif selon l'une quelconque des revendications 1 à 5, caractérisé en outre en ce qu'une feuille de couverture est positionnée comme feuille la plus en dessus et comme feuille la plus en dessous dudit stratifié.

12. Stratifié décoratif selon la revendication 10 ou 11, caractérisé en outre en ce que cette feuille de couverture est à haute abrasion pour donner une résistance au frottement et à la déformation.

13. Stratifié décoratif selon l'une quelconque des revendications 10, 11 ou 12, caractérisé en outre en ce que cette feuille de couverture est une feuille de couverture teintée.

14. Stratifié décoratif selon l'une quelconque des précédentes revendications, caractérisé en outre en ce que les fibres de cellulose comprennent des fibres de feuillus et de résineux.

15. Stratifié décoratif selon l'une quelconque des revendications 1 à 5, caractérisé en outre en ce qu'il contient de surcroît au moins une feuille intérieure de Kraft non blanchi.

16. Feuille pour être utilisée dans un stratifié décoratif, caractérisée en ce qu'elle est formée à partir de fibres de cellulose blanchies et d'un agent opacifiant comprenant un ou plusieurs dioxydes de titane, pigments à base de perle, de l'argile, de la silice amorphe, et d'autres pigments opacifiants similaires, ladite feuille présentant une opacité contrôlée et une transmission diffusée telles que cette feuille est utile en procurant à un stratifié un effet tridimensionnel par réflection de la lumière à partir des différentes couches du stratifié, dans lequel la quantité combinée d'agent opacifiant présente la relation suivante avec le poids de base de la feuille:
| Poids de base x 10⁻² kgm⁻² (lbs/3x10³ ft²) | Agent opacifiant (%) |
|---|---|
| 3,25 - 8,12 (20 - 50) | 0,5 - 10 |
| 8,12 - 12,64 (50 - 100) | 0,5 - 5 |
| 16,24 - 32,48 (100 - 200) | 0,5 - 2 |
le pourcentage d'agent opacifiant étant basé sur le poids total de fibres de cellulose blanchies et d'agent opacifiant.

17. Feuille selon la revendication 16, caractérisée en outre en ce que ces fibres de cellulose comprennent des fibres de feuillus et de résineux.
